# EUROPÄISCHE PATENTANMELDUNG

(11) **EP 3 636 482 A1**
(43) Veröffentlichungstag der Anmeldung: **15.04.2020**
(21) Anmeldenummer: 19201665.7
(22) Anmeldetag: 07.10.2019
(51) Int. Cl.: B60L 53/302, B60L 58/26

(54) **FAHRZEUG MIT EINEM ZUMINDEST BEDARFSWEISE MIT EINER FLÜSSIGKEIT BETRIEBENEN WÄRMETAUSCHER, LADESTATION SOWIE VERFAHREN ZUM LADEN EINES ELEKTRISCHEN ENERGIESPEICHERS EINES FAHRZEUGES**

(30) Priorität: 11.10.2018 DE 102018125159
(71) Anmelder: Volkswagen AG, 38440 Wolfsburg (DE)
(72) Erfinder: ALBRECHT, Jan-Christoph, 38442 Wolfsburg (DE); WESTHÄUSER, Jochen, 38102 Braunschweig (DE); WACHSMUTH, Carsten, 38179 Schwülper (Lagesbüttel) (DE)
(74) Vertreter: Freischem & Partner Patentanwälte mbB

(57) **Zusammenfassung**

Ein erfindungsgemäßes Fahrzeug weist einen Wärmetauscher (10) auf, der zumindest bedarfsweise mit als Temperiermedium dienender Flüssigkeit befüllbar ist, wobei der Wärmetauscher (10) mindestens eine Eintrittsöffnung (12) für ein Prozessmedium und mindestens eine Austrittsöffnung (14) für das Prozessmedium aufweist und wobei der Wärmetauscher (10) mindestens eine Eintrittsöffnung (16) für das Temperiermedium und mindestens eine Austrittsöffnung (18) für das Temperiermedium aufweist. Ferner weist der Wärmetauscher (10) mindestens ein Mittel zur aktiven Entfernung von in dem Wärmetauscher (10) befindlichem Temperiermedium auf, und/oder der Wärmetauscher (10) ist funktional mit mindestens einem Mittel zur aktiven Entfernung von in dem Wärmetauscher (10) befindlichem Temperiermedium verbindbar.

## Beschreibung

Die Erfindung betrifft ein Fahrzeug, insbesondere ein Kraftfahrzeug, mit einem zumindest bedarfsweise mit einer Flüssigkeit betriebenen Wärmetauscher, eine Ladestation für einen elektrischen Energiespeicher eines Fahrzeuges sowie ein Verfahren zum Laden eines elektrischen Energiespeichers eines Fahrzeuges.

Aus DE 10 2015 220 601 A1 ist eine Einleitungsvorrichtung für Kühl- oder Löschmittel in ein Batteriepack bekannt, über welche in einem Brandfall des Batteriepacks oder einer Batteriezelle in einem Batteriepack über ein Anschlusselement ein Kühl- oder Löschmittelspeicher fluidtechnisch verbunden werden kann, wobei mit dem Kühl- oder Löschmittelspeicher insbesondere ein Kühl- oder Löschmitteltank eines Feuerwehrfahrzeuges gemeint ist. Auf einen sich während der Lebensdauer eines Batteriepacks ständig wiederholenden Ladevorgang nimmt das Dokument nicht im Detail Bezug.

Aus DE 10 2016 202 407 A1 ist eine Ladestation zum Laden eines elektrischen Energiespeichers eines Fahrzeuges bekannt. Zur Kühlung des Fahrzeuges während des Ladervorgangs weist die Ladestation eine Kühleinrichtung auf, die dazu vorgesehen ist, dem Fahrzeug Wärme zu entziehen. Diese Kühleinrichtung soll als Gebläse Kühlluft in Richtung des Fahrzeugvorderwagens fördern. Zum Abkühlen der Kühlluft ist eine Wärmetauschereinrichtung vorgesehen, die mit Grundwasser oder Flusswasser arbeiten soll.

In US 9,527,403 B2 sind ein Verfahren sowie eine Anordnung aus einer Ladestation und einem Fahrzeug zum Laden eines elektrischen Energiespeichers des Fahrzeuges beschrieben, gemäß welchen die Ladestation sowohl elektrische Energie zum Laden als auch Wasser, Luft oder ein anderes Fluid zur thermischen Konditionierung des Energiespeichers während des Ladevorgangs bereitstellen soll. Nachteilig an diesem Verfahren und der Anordnung ist, dass als Fluid verwendete Flüssigkeit nach einem Ladevorgang zumindest teilweise in Form von Restflüssigkeit in dem Fahrzeug zurückbleibt. Wenn diese Restflüssigkeit, insbesondere im Winter, zu Eis erstarrt, können Teile des Fahrzeuges platzen, insbesondere solche Leitungen und/oder Elemente, in welchen Restflüssigkeit verblieben ist.

Der Erfindung liegt die Aufgabe zugrunde, ein Fahrzeug mit einem mit Flüssigkeit betriebenen Wärmetauscher, eine Ladestation für einen elektrischen Energiespeicher eines Fahrzeuges, eine Anordnung aus einem solchen Fahrzeug und einer solchen Ladestation sowie ein Verfahren zum Laden eines elektrischen Energiespeichers eines Fahrzeuges zur Verfügung zu stellen, die ein effizientes Laden ermöglichen und eine hohe Funktionssicherheit aufweisen.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Fahrzeug weist einen Wärmetauscher auf, der zumindest bedarfsweise mit als Temperiermedium dienender Flüssigkeit befüllbar ist, wobei der Wärmetauscher mindestens eine Eintrittsöffnung für ein Prozessmedium und mindestens eine Austrittsöffnung für das Prozessmedium aufweist. Ferner weist der Wärmetauscher mindestens eine Eintrittsöffnung für das Temperiermedium und mindestens eine Austrittsöffnung für das Temperiermedium auf. Dabei weist der Wärmetauscher darüber hinaus Mittel zur aktiven Entfernung von in dem Wärmetauscher befindlichem Temperiermedium und/oder der Wärmetauscher ist funktional mit Mitteln zur aktiven Entfernung von in dem Wärmetauscher befindlichem Temperiermedium verbindbar. Wie im Folgenden anhand konkreter Ausführungsbeispiele noch deutlich werden wird, sind unter den vorstehenden genannten Mitteln im Sinne der Erfindung zum einen konstruktive Gestaltungen, wie z.B. geeignet ausgebildete, separate Öffnungen, und zum anderen Vorrichtungen, wie z.B. Vibrationsvorrichtungen, Ventilatoren etc., zu verstehen. Dabei sind geeignete konstruktive Gestaltungen und Vorrichtungen auch miteinander kombinierbar.

Mit dem vorstehend genannten Temperiermedium ist insbesondere ein Kühlmedium gemeint. Es kann sich bei dem Temperiermedium jedoch um ein Heizmedium handeln, das eingesetzt wird, um das Erreichen einer bestimmten, höheren Mindesttemperatur zu beschleunigen.

Mit befüllbar ist sowohl ein manuelles Befüllen zwecks späterer Durchströmung gemeint als auch ein permanentes Befüllen, indem ein Temperiermedium, insbesondere ein Kühlmedium permanent durch den Wärmetauscher strömt. Dabei kann als Temperiermedium kontinuierlich neues Temperiermedium durch den Wärmetauscher geleitet werden, beispielsweise indem Flusswasser an einer bestimmten Entnahmestelle entnommen und mittels einer geeigneten Leitung von dieser Entnahmestelle in den Wärmetauscher rein und durch diesen hindurchgeleitet wird. Es kann sich aber auch um ein Temperiermedium handeln, das an einer anderen Stelle eines Kreislaufes rückgekühlt wird und den Kreislauf immer wieder durchströmt.

Die Erfindung wurde insbesondere für Fahrzeuge mit einem elektrischen Antriebsenergiespeicher entwickelt, der regelmäßig wieder aufgeladen werden muss. Mit Antriebsenergiespeicher sind dabei insbesondere elektrische Energiespeicher in Form von wiederaufladbaren Batterien gemeint, die vollständig oder zumindest teilweise für den Antrieb (d.h. das Beschleunigen und Antreiben) des Fahrzeuges eingesetzt werden. Bei derartigen Fahrzeugen ist, insbesondere in Verbindung mit Schnellladevorgängen, bei welchen hohe Ströme fließen und damit auch viel Wärme entsteht, eine effiziente Kühlung besonders wichtig, um ein Überhitzen des Antriebsenergiespeichers zu vermeiden.

Das Vorsehen von Mitteln zur aktiven Entfernung von in dem Wärmetauscher befindlichen Temperiermedien an dem Wärmetauscher selbst oder durch funktionale Verbindung mit derartigen Mitteln ermöglicht es, als Temperiermedium einfaches Wasser zu verwenden, welches im Falle eines Verbleibs in dem Wärmetauscher beim Betrieb eines Fahrzeuges gefrieren und dadurch Beschädigungen einzelner Elemente verursachen könnte. Wenn einfaches Wasser als Temperiermedium eingesetzt wird, können an die Verbindung zwischen einer Zuführleitung mit der Einführöffnung für das Prozessmedium und einer Abfuhrleitung und der Austrittsöffnung für das Prozessmedium nur geringe Anforderungen gestellt werden, weil Leckagen keine negativen Auswirkungen auf die Umwelt haben. Gegebenenfalls im Bereich der Verbindung austretendes Wasser kann einfach in der Umgebung versickern bzw. verdunsten. Umweltbeeinträchtigungen sind dadurch nicht zu befürchten.

In einer praktischen Ausführungsform eines erfindungsgemäßen Fahrzeuges weist der Wärmetauscher selbst als Mittel zur aktiven Entfernung von in dem Wärmetauscher befindlichem Temperiermedium einen Ventilator und/oder eine Absaugvorrichtung auf. In einer anderen praktischen Ausführungsform ist der Wärmetauscher mit einem in dem Fahrzeug angeordneten Ventilator und/oder einer Absaugvorrichtung gekoppelt. Ein Ventilator kann beispielsweise genutzt werden, um in dem Wärmetauscher befindliche Flüssigkeit mithilfe eines Luftstroms auszutreiben, indem über eine Luft-Zuführöffnung Luft eingebracht und über eine Luftabführöffnung Luft wieder aus dem Wärmetauscher herausgeführt wird, wobei die Luft möglichst vollständig durch die Bereiche des Wärmetauschers geleitet wird, welche zuvor von dem Temperiermedium durchströmt wurden.

Alternativ oder in Ergänzung dazu kann auch eine Absaugvorrichtung vorgesehen sein, um durch einen Saugprozess eine als Temperiermedium dienende Flüssigkeit vollständig oder zumindest weitestgehend vollständig aus dem Wärmetauscher herauszufördern.

Unabhängig davon, ob der Wärmetauscher selbst einen Ventilator und/oder eine Absaugvorrichtung aufweist oder ob ein in dem Fahrzeug angeordneter Ventilator und/oder eine Absaugvorrichtung mit dem Wärmetauscher gekoppelt ist, ermöglicht diese Ausführungsform ein autarkes Betreiben des Wärmetauschers und insbesondere die Möglichkeit, als Temperiermedium in den Wärmetauscher eingebrachte Flüssigkeit mithilfe von in dem Fahrzeug selbst vorgesehenen Mitteln wieder aus dem Wärmetauscher herauszufördern. Dies ist insbesondere dann relevant, wenn als Temperiermedium eine Flüssigkeit eingesetzt wird, die in einem gewissen, bestimmungsgemäßen Temperatur-Betriebsbereich des Fahrzeuges gefrieren und dadurch Schäden verursachen kann.

In einer weiteren praktischen Ausführungsform eines erfindungsgemäßen Fahrzeuges weist der Wärmetauscher als Mittel zur aktiven Entfernung von in dem Wärmetauscher befindlichem Temperiermedium mindestens eine separate Temperiermittel-Auslassöffnung und/oder eine separate Entlüftungsöffnung auf. Als Temperiermittel-Auslassöffnung ist insbesondere bodenseitig, d.h. im Bereich eines - in Hochrichtung betrachtet - Tiefpunkts des Wärmetauschers, eine verschließbare Öffnung vorzusehen, welche nur geöffnet werden muss, um ein weitestgehend vollständiges, schwerkraftbedingtes Ausströmen einer als Temperiermedium dienenden Flüssigkeit zu bewirken. Wenn die Öffnung nicht ausreichend groß ist, um ein Nachströmen von Luft während des Ausströmens von Flüssigkeit jederzeit zu gewährleisten, ist es sinnvoll, eine separate Entlüftungsöffnung vorzusehen, welche vorzugsweise im oberen Bereich des Wärmetauschers angeordnet ist, besonders bevorzugt im Bereich einer in Hochrichtung betrachtet oberen Deckwand.

Wenn die mindestens eine Temperiermittel-Auslassöffnung mittels einer Betätigungseinheit schaltbar ausgebildet ist und/oder die mindestens eine Entlüftungsöffnung mittels einer Betätigungseinheit schaltbar ausgebildet ist, kann ein Entleerungsvorgang manuell erfolgen oder auch automatisch mithilfe einer Steuerung aktiviert werden. Alternativ oder in Ergänzung dazu kann im Bereich der mindestens einen Temperiermittel-Auslassöffnung und/oder im Bereich der mindestens einen Entlüftungsöffnung ein Ventil angeordnet sein. Dadurch kann die Betriebssicherheit eines erfindungsgemäßen Fahrzeuges weiter verbessert werden, insbesondere wenn der Wärmetauscher derart ausgebildet ist, dass ein manuelles Entleeren nicht erforderlich ist, beispielsweise indem eine fahrzeugseitige Steuerung bedarfsweise automatisch eine als Temperiermedium in dem Wärmetauscher befindliche Flüssigkeit aus dem Wärmetauscher herausleitet oder weil eine geeignete Auswahl und/oder Steuerung von einem oder mehreren Ventilen im Bereich der mindestens einen Temperiermittel-Auslassöffnung und/oder im Bereich der mindestens einen Entlüftungsöffnung vorgesehen ist.

In Verbindung mit einer Temperiermittel-Auslassöffnung, die zum Ableiten von in dem Wärmetauscher befindlicher Flüssigkeit lediglich geöffnet wird, kann es vorteilhaft sein, wenn der Wärmetauscher mit einer Vibrationsvorrichtung gekoppelt ist, wobei der Wärmetauscher durch bedarfsweises Aktivieren der Vibrationsvorrichtung derart in Schwingung versetzbar ist, dass das Abfließen von Temperiermedium aus der geöffneten Temperiermittel-Auslassöffnung begünstigt wird. Durch Aktivierung einer entsprechenden Vibrationsvorrichtung kann entweder während des gesamten Entleerungsvorgangs oder auch nur während einer Endphase eines Entleerungsvorgangs eines Wärmetauschers die Menge von ausströmendem Temperiermedium maximiert werden, indem mithilfe der Vibrationsvorrichtung vermieden wird, dass sich in dem Wärmetauscher Restmengen von Temperiermedium sammeln und in dem Wärmetauscher verbleiben, beispielsweise weil ein zur Temperiermittel-Auslassöffnung führendes Gefälle nicht ausreichend groß ist, um ein schwerkraftbedingtes, restloses Entleeren zu bewirken.

Die Erfindung betrifft auch eine Ladestation für einen elektrischen Energiespeicher eines Fahrzeuges mit einem elektrischen Energiezuführmodul zum Herstellen einer Verbindung zu einem elektrischen Energiespeicher eines Fahrzeuges, wobei mindestens ein Kopplungsmittel zur funktionalen Kopplung der Ladestation mit einem Wärmetauscher eines Fahrzeuges und als mindestens ein Mittel zur aktiven Entfernung von in dem Wärmetauscher des Fahrzeuges befindlichem Temperiermedium ein Ventilator und/oder eine Absaugeinrichtung vorgesehen ist. Dabei ist der Ventilator und/oder die Absaugeinrichtung funktional mit dem Kopplungsmittel zusammenwirkend angeordnet. Mit anderen Worten ausgedrückt, kann das Herausfördern von als Temperiermedium dienender Flüssigkeit aus einem Wärmetauscher auch durch funktional geeignetes Verbinden und Aktivieren von einem seitens einer Ladestation vorgesehenen Ventilator und/oder einer entsprechenden Absaugeinrichtung bewirkt werden. In diesem Fall ist es nicht erforderlich, eine entsprechende Absaugeinrichtung oder einen Ventilator in dem Fahrzeug selbst vorzusehen, so dass mit dem Fahrzeug selbst das entsprechende Bauteilgewicht für diese Elemente nicht während der Fahrt und dem Betreiben des Fahrzeuges mitgeführt werden muss. Dies ist vorteilhaft zur Erzielung eines niedrigen Fahrzeuggewichtes, eines niedrigen Energieverbrauchs und einer hohen Reichweite von Fahrzeugen.

Die Erfindung betrifft auch ein Verfahren zum Betreiben eines Wärmetauschers eines Kraftfahrzeuges, gemäß welchem der Wärmetauscher während einer Betriebsphase bedarfsweise mit einer als Temperiermedium dienenden Flüssigkeit befüllt und mit diesem Temperiermedium betrieben wird, wobei nach dem Betreiben des Wärmetauschers das Temperiermedium wieder aus dem Wärmetauscher entfernt wird. Mit der Formulierung "nach dem Betreiben" sollen sowohl Fälle erfasst sein, in welchen nach jedem Betreiben des Wärmetauschers das Temperiermedium wieder aus dem Wärmetauscher entfernt wird, als auch Fälle, in denen nur bei Vorliegen bestimmter weiterer Parameter das Temperiermedium wieder aus dem Wärmetauscher entfernt wird. Als ein derartiger Parameter kommt insbesondere die Umgebungstemperatur in Betracht, insbesondere wenn diese temporär so niedrig ist, dass die Gefahr besteht, dass das Temperiermedium gefriert und durch eine damit einhergehende Volumenausdehnung zu einer Beschädigung des Wärmetauschers oder weiterer Elemente des Kraftfahrzeuges führen kann.

Gemäß einer praktischen Ausführungsform des erfindungsgemäßen Verfahrens wird als Temperiermedium Wasser eingesetzt, und/oder das Temperiermedium wird nach einer Betriebsphase in die Umgebung oder zu einer Ablaufeinrichtung einer Ladestation geleitet. Auf die Vorteile in Verbindung mit der Nutzung von einfachem Wasser oder sonstiger, die Umwelt nicht negativ beeinträchtigender Flüssigkeiten wurde bereits verwiesen. Mit Wasser sind insbesondere Leitungswasser, Flusswasser, Grundwasser oder sonstiges, natürliches Wasser gemeint, bevorzugt ohne Zusätze, durch welche ein Ausleiten des Temperiermediums in die Umwelt bedenklich oder sogar verboten wäre.

Wie bereits in Verbindung mit dem erfindungsgemäßen Fahrzeug erläutert, kann auch gemäß einem erfindungsgemäßen Verfahren das Temperiermedium
a) mittels mindestens einer seitens eines Fahrzeuges vorgesehenen Vorrichtung aus dem Wärmetauscher entfernt werden,
b) mittels einer seitens einer Ladestation vorgesehenen Vorrichtung aus dem Wärmetauscher entfernt werden und/oder
c) mittels einer mobilen Vorrichtung aus dem Wärmetauscher entfernt werden.

Die Varianten a) und b) wurden vorstehend bereits ausführlich erläutert. Mit Variante c) ist insbesondere die Verwendung eines tragbaren oder zumindest fahrbaren Ventilators und/oder einer tragbaren oder fahrbaren Absaugeinrichtung gemeint, die zum Entfernen von in dem Wärmetauscher befindlichem Temperiermedium in das Fahrzeug verbracht und mit diesem funktional geeignet gekoppelt wird.

Ebenfalls in Verbindung mit dem erfindungsgemäßen Fahrzeug erläutert wurde bereits die Möglichkeit, dass das Entfernen des Temperiermediums aus dem Wärmetauscher durch Ausblasen, Ablassen und/oder Absaugen erfolgt.

Weitere praktische Ausführungsformen der Erfindung sind nachfolgend im Zusammenhang mit den Zeichnungen beschrieben. Es zeigen:
- Fig. 1: einen Wärmetauscher eines erfindungsgemäßen Fahrzeuges in einer schematischen Darstellung und
- Fig. 2: einen Wärmetauscher eines erfindungsgemäßen Fahrzeuges gemeinsam mit einer Ladestation für elektrische Energiespeicher von Fahrzeugen.

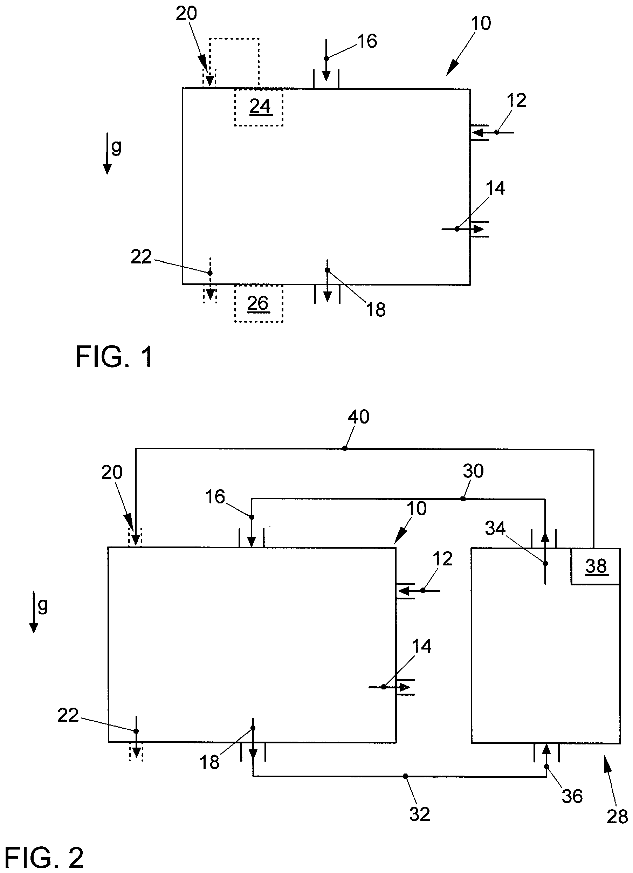

Figur 1 zeigt eine erste Ausführungsform eines erfindungsgemäßen Wärmetauschers 10, welcher hier vereinfacht nur als Rechteck dargestellt ist. Der Wärmetauscher 10 weist eine Eintrittsöffnung 12 für ein Prozessmedium, eine Austrittsöffnung 14 für das Prozessmedium, eine Eintrittsöffnung 16 für ein Temperiermedium und eine Austrittsöffnung 18 für das Temperiermedium auf. Als Prozessmedium sind grundsätzlich jegliche Fluide verwendbar, d.h. sowohl Flüssigkeiten als auch gasförmige Prozessmedien.

Als Temperiermedium, insbesondere als Kühlmedium, sind jegliche Flüssigkeiten verwendbar, vorzugsweise jedoch umweltverträgliche Flüssigkeiten, die ohne Bedenken in die Umwelt abgelassen werden können. Diesbezüglich wird insbesondere auf Wasser verwiesen. Innerhalb des Wärmetauschers 10 wird durch Ausbildung geeigneter Strukturen (nicht gezeigt) ein Wärmeaustausch zwischen dem Prozessmedium und dem Temperiermedium bewirkt. Dies kann insbesondere mittels geeigneter Lamellen oder sonstiger Oberflächenstrukturen und einer getrennten Strömungsführung - und vorzugsweise auch einer Strömungstrennung - zwischen Prozessmedium und Temperiermedium erfolgen. Wenn es sich bei dem Temperiermedium um ein Kühlmedium handelt, ist es die Hauptaufgabe des Wärmetauschers 10, dem Prozessmedium zwischen Einleitung über die Eintrittsöffnung 12 und Ausleitung aus der Austrittsöffnung 14 Wärme zu entziehen, indem diese Wärme von dem Prozessmedium auf das Kühlmedium übertragen wird.

Die Richtung der Schwerkraft ist in den Figuren 1 und 2 mit einem Pfeil g gekennzeichnet.

Wie in Figur 1 erkennbar ist, ist oberseitig eine optionale Entlüftungsöffnung 20 vorgesehen. In dieser Entlüftungsöffnung 20 kann optional ein nicht dargestelltes Ventil angeordnet sein, insbesondere ein Entlüftungsventil, welches derart ausgebildet ist, dass es Luft in den Wärmetauscher 10 eindringen, aber Flüssigkeiten weder eindringen noch aus dem Wärmetausche 10 austreten lässt. Unterseitig ist eine ebenfalls optionale Temperiermittel-Auslassöffnung 22 vorgesehen. Wenn ein in dem Wärmetauscher befindliches Temperiermittel, insbesondere Wasser, aus dem Wärmetauscher 10 entfernt und somit abgelassen werden soll, kann dazu beispielsweise die Temperiermittel-Auslassöffnung 22 geöffnet werden und gleichzeitig die optionale Entlüftungsöffnung 20 geöffnet werden. Dies führt dazu, dass das Temperiermittel schwerkraftbedingt aus dem Wärmetauscher 10 herausströmt.

Um sicherzugehen, dass das Temperiermittel möglichst vollständig aus dem Wärmetauscher 10 entleert wird, kann der Wärmetauscher 10 optional einen Ventilator 24 aufweisen, mittels welchem ein Fluid, insbesondere Luft, oberseitig durch die Entlüftungsöffnung 20 oder eine beliebige andere Öffnung, beispielsweise die Eintrittsöffnung 16 für das Temperiermedium, eingebracht und durch die Entlüftungsöffnung 20 wieder aus dem Wärmetauscher 10 herausgefördert wird. Dadurch wird in dem Wärmetauscher 10 befindliche Restflüssigkeit aktiv aus den Bereichen des Wärmetauschers 10 herausgefördert, welche zuvor von dem Temperiermedium durchströmt wurden.

Das Vorstehende kann alternativ oder in Ergänzung auch mittels einer Absaugvorrichtung 26 bewirkt werden, welche vorzugsweise - wie in Figur 1 gezeigt - bodenseitig eines Wärmetauschers 10 angeordnet ist und funktional derart mit einer Austrittsöffnung 18 verbunden ist, dass das Temperiermedium aus dem Wärmetauscher 10 herausgesaugt werden kann.

Figur 2 zeigt ein weiteres Ausführungsbeispiel, bei welchem für funktional identische oder zumindest funktionsgleiche Elemente die gleichen Bezugszeichen verwendet werden wie bei dem in Verbindung mit Figur 1 erläuterten Ausführungsbeispiel. Figur 2 zeigt die Anordnung einer Ladestation 28 an einem Wärmetauscher 10. Über eine nicht dargestellte Verbindung kann ein Ladekabel der Ladestation 28 mit einem elektrischen Energiespeicher (nicht dargestellt) eines ebenfalls nicht dargestellten Fahrzeuges verbunden werden, um den elektrischen Energiespeicher mit neuer elektrischer Energie zu versorgen. Zusätzlich ist eine Zuleitung 30 zum Einleiten von einer als Temperiermedium dienenden Flüssigkeit in den Wärmetauscher 10 vorgesehen. Darüber hinaus ist eine Ableitung 32 vorgesehen, um als Temperiermedium dienende Flüssigkeit wieder aus dem Wärmetauscher 10 abzuführen und zu der Ladestation 28 zurückzuleiten. Die Ladestation 28 weist dazu eine Ausströmöffnung 34 und eine Einströmöffnung 36 auf. Im Bereich der Ausströmöffnung 34 und im Bereich der Einströmöffnung 36 können optional Kupplungsmittel vorgesehen sein, um die Zuleitung 30 bzw. die Ableitung 32 mit einer von dem Wärmetauscher 10 des nicht dargestellten Fahrzeuges zu der jeweiligen Öffnung führenden Leitung zu verbinden. Das gleiche gilt sinngemäß für die Eintrittsöffnung 16 und die Austrittsöffnung 18 an dem Wärmetauscher 10.

Um analog zu der vorstehend beschriebenen Möglichkeit das Temperiermedium durch Ausblasen aus dem Wärmetauscher 10 fördern zu können, ist seitens der Ladestation 28 ein Ventilator 38 vorgesehen, der es ermöglicht, über eine Fluidleitung 40 ein gasförmiges Fluid, insbesondere Luft, wie zum Beispiel Umgebungsluft, über die Entlüftungsöffnung 20 durch den Wärmetauscher 10 hindurch und durch die Entlüftungsöffnung 20 wieder aus dem Wärmetauscher 10 heraus zu fördern. Dadurch kann sich in dem Wärmetauscher 10 befindliches Temperiermedium auf einfache Art und Weise weitestgehend vollständig bzw. vollständig entfernt werden.

Alternativ oder in Ergänzung zum Ausblasen über die Entlüftungsöffnung 20 kann es vorgesehen sein, über die Eintrittsöffnung 16 Luft oder ein anderes gasförmiges Fluid zum Ausblasen in den Wärmetauscher 10 einzubringen und mit Hilfe dieser Luft bzw. dieses gasförmigen Fluides darin befindliches Wasser aktiv durch die Austrittsöffnung 18 und/oder die Temperiermittel-Auslassöffnung 22 herauszufördern. Dazu kann ebenfalls der Ventilator 38 oder ein weiterer, nicht dargestellter zusätzlicher Ventilator genutzt werden, wobei der zusätzliche Ventilator nicht zwingend Teil der Ladestation 28 sein muss, sondern auch ein mobiler Ventilator oder Teil des Wärmetauschers 10 selbst oder Teil des nicht dargestellten Fahrzeuges sein kann.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

In beiden Beispielen kann als Temperiermedium, insbesondere als Kühlmedium, Wasser ohne zusätzliche, insbesondere ohne nicht umweltverträgliche Zusatzstoffe eingesetzt werden. Dadurch ist es unkritisch, wenn die Anschlüsse zwischen Ladestation 28 und Wärmetauscher 10 und/oder sonstige Anschlüsse an den Wärmetauscher 10 von einfacher Qualität sind, denn Leckagen sind weder kostenintensiv, noch beeinträchtigen diese die Umwelt oder die Sicherheit eines erfindungsgemäßen Fahrzeuges.

### Bezugszeichenliste

- 10: Wärmetauscher
- 12: Eintrittsöffnung für ein Prozessmedium
- 14: Austrittsöffnung für ein Prozessmedium
- 16: Eintrittsöffnung für ein Temperiermedium
- 18: Austrittsöffnung für ein Temperiermedium
- 20: optionale Entlüftungsöffnung
- 22: optionale Temperiermittel-Auslassöffnung
- 24: Ventilator
- 26: Absaugvorrichtung
- 28: Ladestation
- 30: Zuleitung
- 32: Ableitung
- 34: Ausströmöffnung
- 36: Einströmöffnung
- 38: Ventilator
- 40: Fluidleitung

## Patentansprüche

1. Fahrzeug mit einem Wärmetauscher (10), der zumindest bedarfsweise mit als Temperiermedium dienender Flüssigkeit befüllbar ist, wobei der Wärmetauscher (10) mindestens eine Eintrittsöffnung (12) für ein Prozessmedium und mindestens eine Austrittsöffnung (14) für das Prozessmedium aufweist und wobei der Wärmetauscher (10) mindestens eine Eintrittsöffnung (16) für das Temperiermedium und mindestens Austrittsöffnung (18) für das Temperiermedium aufweist,
**dadurch gekennzeichnet,**
**dass** der Wärmetauscher (10) ferner mindestens ein Mittel zur aktiven Entfernung von in dem Wärmetauscher (10) befindlichem Temperiermedium aufweist und/oder funktional mit mindestens einem Mittel zur aktiven Entfernung von in dem Wärmetauscher (10) befindlichem Temperiermedium verbindbar ist.

2. Fahrzeug nach dem vorstehenden Anspruch, **dadurch gekennzeichnet, dass** der Wärmetauscher (10) selbst als Mittel zur aktiven Entfernung von in dem Wärmetauscher (10) befindlichem Temperiermedium einen Ventilator (24) und/oder eine Absaugvorrichtung (26) aufweist oder dass der Wärmetauscher (10) mit einem in dem Fahrzeug angeordneten Ventilator (24) und/oder einer Absaugvorrichtung (26) gekoppelt ist.

3. Fahrzeug nach einem der vorstehenden Ansprüche, **dadurch gekennzeichnet, dass** der Wärmetauscher (10) als Mittel zur aktiven Entfernung von in dem Wärmetauscher (10) befindlichem Temperiermedium mindestens eine separate Temperiermittel-Auslassöffnung (22) und/oder mindestens eine separate Entlüftungsöffnung (20) aufweist.

4. Fahrzeug nach dem vorstehenden Anspruch, **dadurch gekennzeichnet, dass** die mindestens eine Temperiermittel-Auslassöffnung (22) mittels einer Betätigungseinheit schaltbar ausgebildet ist und/oder die mindestens eine Entlüftungsöffnung (20) mittels einer Betätigungseinheit schaltbar ausgebildet ist und/oder dass im Bereich der mindestens einen Temperiermittel-Auslassöffnung (22) und/oder im Bereich der mindestens einen Entlüftungsöffnung (20) ein Ventil angeordnet ist.

5. Fahrzeug nach einem der beiden vorstehenden Ansprüche, **dadurch gekennzeichnet, dass** der Wärmetauscher (10) mit einer Vibrationsvorrichtung gekoppelt ist, wobei der Wärmetauscher durch bedarfsweises Aktivieren der Vibrationsvorrichtung derart in Schwingung versetzbar ist, dass das Abfließen von Temperiermedium aus der geöffneten Temperiermittel-Auslassöffnung (22) begünstigt wird.

6. Ladestation (28) für einen elektrischen Energiespeicher eines Fahrzeuges mit einem elektrischen Energiezuführmodul zum Herstellen einer Verbindung zu einem elektrischen Energiespeicher eines Fahrzeuges,
**dadurch gekennzeichnet,**
**dass** mindestens ein Kopplungsmittel zur funktionalen Kopplung der Ladestation (28) mit einem Wärmetauscher (10) eines Fahrzeuges und als mindestens ein Mittel zur aktiven Entfernung von in dem Wärmetauscher (10) des Fahrzeuges befindlichem Temperiermedium ein Ventilator (24) und/oder eine Absaugeinrichtung (26) vorgesehen ist, wobei der Ventilator (24) und/oder die Absaugeinrichtung (26) funktional mit dem Kopplungsmittel zusammenwirkend angeordnet ist.

7. Verfahren zum Betreiben eines Wärmetauschers (10) eines Kraftfahrzeuges, gemäß welchem der Wärmetauscher (10) während einer Betriebsphase bedarfsweise mit einer als Temperiermedium dienenden Flüssigkeit befüllt und mit diesem Temperiermedium betrieben wird, wobei nach dem Betreiben des Wärmetauschers (10) das Temperiermedium wieder aus dem Wärmetauscher (10) entfernt wird.

8. Verfahren nach dem vorstehenden Anspruch, **dadurch gekennzeichnet, dass** als Temperiermedium Wasser eingesetzt wird und/oder das Temperiermedium nach einer Betriebsphase in die Umgebung oder zu einer Ablaufeinrichtung einer Ladestation (28) geleitet wird.

9. Verfahren nach einem der beiden vorstehenden Ansprüche, **dadurch gekennzeichnet, dass** das Temperiermedium
a) mittels mindestens einer seitens eines Fahrzeuges vorgesehenen Vorrichtung aus dem Wärmetauscher (10) entfernt wird,
b) mittels einer seitens einer Ladestation (28) vorgesehenen Vorrichtung aus dem Wärmetauscher (10) entfernt wird und/oder
c) mittels einer mobilen Vorrichtung aus dem Wärmetauscher (10) entfernt wird.

10. Verfahren nach einem der drei vorstehenden Ansprüche, **dadurch gekennzeichnet, dass** das Entfernen des Temperiermediums aus dem Wärmetauscher (10) durch Ausblasen, Ablassen und/oder Absaugen erfolgt.
